# EUROPÄISCHE PATENTANMELDUNG

(11) **EP 3 034 378 A1**
(43) Veröffentlichungstag der Anmeldung: **22.06.2016**
(21) Anmeldenummer: 15201080.7
(22) Anmeldetag: 18.12.2015
(51) Int. Cl.: B62B 5/06, B66F 9/075

(54) **DEICHSELGEFÜHRTES FLURFÖRDERZEUG**

(30) Priorität: 18.12.2014 DE 102014118960
(71) Anmelder: Jungheinrich Aktiengesellschaft, 22047 Hamburg (DE)
(72) Erfinder: Hohmann, Michael, 04277 Leipzig (DE); Hanusch, Stefan, 04229 Leipzig (DE)
(74) Vertreter: Hauck Patentanwaltspartnerschaft mbB

(57) **Zusammenfassung**

Flurförderzeug (10) mit einer an einem Antriebsrahmen drehbar gelagerten Lenksäule (42) und einer Deichsel, die ein Deichselrohr (38) mit einem endseitigen Deichselkopf (30) aufweist, wobei der Außendurchmesser der Lenksäule (42) kleiner als der Innendurchmesser des Deichselrohrs (38) ist, das Deichselrohr (38) in Längsrichtung beweglich auf der Lenksäule (42) gelagert ist, wobei ein Federelement (60) zwischen Deichselrohr (38) und Lenksäule (42) angeordnet ist, wobei die Lenksäule (42) eine erste, in Längsrichtung sich erstreckende Nut (44), in der ein mit dem Deichselrohr (38) verbundenes Gleitelement (46) angeordnet ist und eine zweite, sich in Längsrichtung erstreckende Nut (52) aufweist, die zum freien Ende der Lenksäule (42) hin geschlossen ist und in die ein mit dem Deichselrohr (38) verbundenes Sicherungselement (50) eintaucht.

## Beschreibung

Die vorliegende Erfindung betrifft ein Flurförderzeug mit einer an einem Antriebsrahmen drehbar gelagerten Lenksäule und einer Deichsel, die ein Deichselrohr mit einem endseitigen Steuerelement aufweist.

Aus EP 2 050 652 B1 ist eine Deichsel mit einstellbarer Länge bekannt. Die Deichsel besteht aus zwei Elementen, die verschiebbar zueinander angeordnet sind, um die Deichsel in einer gewünschten Länge einstellen zu können. Die Deichsel ist mit einer Druckeinrichtung ausgestattet, die eine Änderung der Länge unterstützt, wobei die Deichsel in mindestens zwei Längenpositionen fixierbar ist.

Aus US 7,823,961 B2 ist ein Flurförderzeug bekannt, bei dem eine am Antriebsteil angeordnete Fahrerstandplattform gegenüber dem Fahrzeugrahmen gedämpft angeordnet ist.

Aus DE 10 2004 010 121 A1 ist ein batteriebetriebener Hubwagen mit einem nicht anhebbaren Antriebsteil A bekannt. Der Hubwagen ist mit Dämpfungselementen auszustatten, um periodische und stoßartige Belastungen zu dämpfen. Für die Dämpfungselemente ist bekannt, eine gelenkig an dem Antriebsgehäuse angebundene Lenkdeichsel mit einem Dämpfungselement auszustatten. Für dieses Dämpfungselement wird ein in drei Achsen bewegliches Lager, ein sogenanntes Sphäro-Lager, vorgeschlagen. Ebenfalls ist bekannt geworden, zwischen Deichselrohr und Deichselkopf ein Dämpfungselement zur Dämpfung von Schwingungen und/oder Stößen anzuordnen.

Aus DE 1 555 884 ist eine Sicherheitseinrichtung für ein deichselgeführtes Flurförderzeug bekannt, dessen Deichselarm in der Länge verstellbar ist, wobei die beiden ineinander schiebbaren teleskopischen Stücke über eine Feder gegeneinander gelagert sind.

Aus DE 10 2007 020 112 A1 ist eine Deichseleinheit für ein deichselgelenktes Flurförderzeug bekannt. Die Deichseleinheit weist einen Deichselkopf mit einer vertikalen Lenkwelle auf, die in einer stationären Lageranordnung des Flurförderzeugs drehbar und axial fest lagerbar ist. Eine Drehverbindung zwischen Lenkwelle und Hülse erfolgt über einen schwenkbaren Schenkel, der in eine achsparallele Nut der Lenkwelle eingreift. Eine zwischen Hülse und Lenkwelle wirkende Gasdruckfeder dämpft auftretende Relativbewegungen.

Der Erfindung liegt die Aufgabe zugrunde, bei einem deichselgeführten Flurförderzeug mit einfachen Mitteln die Deichsel, insbesondere bei Schlägen auf das Antriebsrad, gefedert zu lagern.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Die Erfindung betrifft ein Flurförderzeug mit einer an einem Antriebsrahmen drehbar gelagerten Lenksäule und mit einer Deichsel. Die Deichsel weist ein Deichselrohr mit einem endseitigen Deichselkopf auf. Der Außendurchmesser der Lenksäule ist kleiner als der Innendurchmesser des Deichselrohrs. Erfindungsgemäß ist das Deichselrohr in Längsrichtung beweglich auf der Lenksäule gelagert und ein Federelement zwischen Deichselrohr und Lenksäule angeordnet. Über die drehbar an dem Antriebsrahmen gelagerte Lenksäule werden ein oder mehrere gelenkte Räder an dem Flurförderzeug gestellt. Die Lenksäule kann mechanisch oder elektrisch mit einem Lenkantrieb gekoppelt sein. Im Gegensatz zu bisher bekannten Lösungen besitzt die erfindungsgemäße Lösung den Vorteil, dass eine Dämpfung zwischen dem Deichselrohr und der Lenksäule erfolgt. Es ist also eine Dämpfung und/oder Federung vorgesehen, in dem Bereich, in dem die Lenkbewegung des Deichselrohrs auf die Lenksäule übertragen wird. Ein Schlag oder eine Erschütterung an dem Antriebsrahmen des Flurförderzeugs und damit auch an der Lenksäule wird auf diese Weise gefedert und nicht über das Deichselrohr mit seinem Deichselkopf an eine Bedienperson weitergeleitet.

Erfahrungsgemäß ist die Lenksäule mit einer in ihrer Längsrichtung sich erstreckenden Nut ausgestattet und in der Nut ist ein Gleitelement angeordnet. Das Gleitelement ist mit dem Deichselrohr verbunden. Über das in der Nut geführte Gleitelement ist das Deichselrohr auf der Lenksäule in deren Längsrichtung verschieblich angeordnet. Die Lenksäule ist ebenfalls mit einer zweiten, sich in Längsrichtung erstreckenden Nut ausgestattet, die zum freien Ende der Lenksäule hin geschlossen ist und in die ein mit dem Deichselrohr verbundenes Sicherungselement eintaucht. Über die in Längsrichtung geschlossene Nut und das darin geführte Sicherungselement wird der Federweg des Deichselrohrs entlang der Lenksäule beschränkt.

In einer bevorzugten Ausgestaltung ist das Gleitelement über eine durch das Deichselrohr geführte Schraube gehalten. Auf diese Weise besteht die Möglichkeit von außen die Schraube zu lösen und so Zugang zu dem Gleitelement zu erhalten.

In einer bevorzugten Ausgestaltung ist ein Federelement auf einem vorstehenden Endabschnitt der Lenksäule angeordnet. Der Endabschnitt ist eine Art Lenkwelle, die in der Lenksäule vorsteht und eine über das Deichselrohr weitergeleitete Lenkbewegung auf die Lenkung überträgt.

In einer bevorzugten Ausgestaltung ist die Lenksäule im Wesentlichen vertikal stehend am Antriebsrahmen angeordnet. Die Lenkbewegung wird also als eine Drehbewegung um eine vertikal stehende Achse auf das oder die gelenkten Räder übertragen. Bevorzugt ist die Deichsel als eine über der Lenksäule angeordnete Kurzdeichsel ausgebildet. Die Kurzdeichsel überträgt im Wesentlichen die Drehbewegung für die Lenkung.

Ein bevorzugtes Ausführungsbeispiel der Erfindung wird anhand der nachfolgenden Figuren näher erläutert. Es zeigen:
- Fig. 1: ein erfindungsgemäßes Flurförderzeug mit aufgenommener Last in einer Ansicht von der Seite und
- Fig. 2: eine erfindungsgemäß vorgesehene Kurzdeichsel in einer im Bereich der Verbindung zur Lenksäule geschnittenen Darstellung.

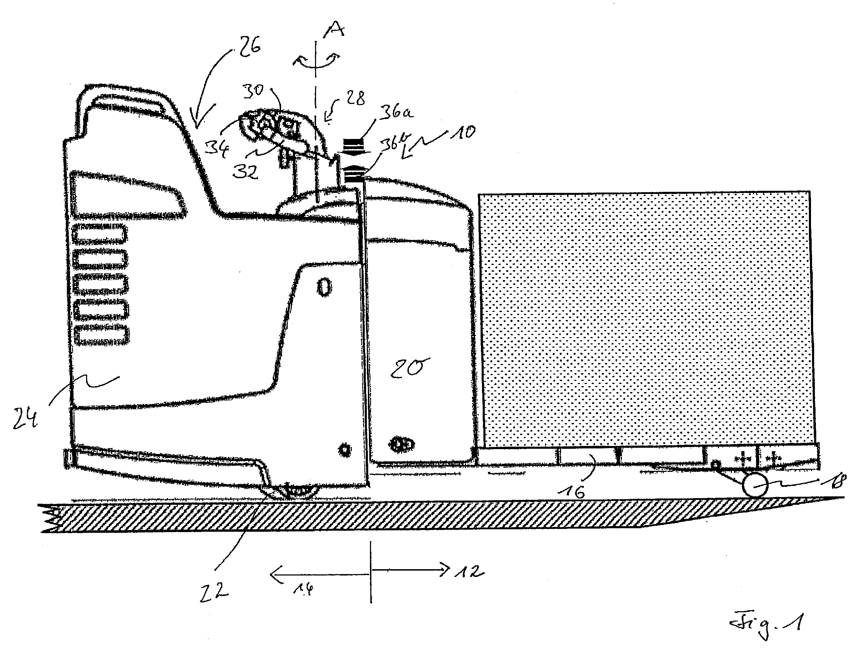

Fig. 1 zeigt in einer schematischen Ansicht ein Niederhubfahrzeug 10 mit einem Lastteil 12 und einem Antrieb steil 14.

Der Antriebsteil 14 besitzt ein Paar Lastgabeln 16, die über an ihrem freien Ende angeordneten Lastrollen 18 abgestützt sind. Ferner besitzt das Lastteil 12 einen in der Ansicht von der Seite dargestellten Batterietrog 20. Der Batterietrog 20 und die Lastgabeln 16 sind starr miteinander verbunden. Die Lastrollen 18 können über Zug- und Druckstangen zur Abstützung des Lastteils 12 herausgeklappt werden. Das Lasttteil 12 ist gegenüber dem Antriebsteil 14 im Niederhub anhebbar. Das Antriebsteil 14 besitzt ein gelenktes und angetriebenes Rad 22. Eine Schürze 24 an dem Antriebsteil umgibt zumindest teilweise eine Fahrerstandplattform 26. In der Fahrerstandplattform 26 ist eine Kurzdeichsel 28 für einen auf der Standplattform stehenden Benutzer zugänglich. Die Kurzdeichsel 28 besitzt einen Deichselkopf 30, der mit Griffen 32 sowie mit Bedienelementen 34 zur Steuerung des Fahrzeugs ausgestattet ist.

Durch eine Drehbewegung um die Lenkachse A wird die Lenkrichtung des angetriebenen Rades 22 gestellt. Die Steuerung der Fahrgeschwindigkeit erfolgt über die Bedienelemente 34 am Deichselkopf.

Mithilfe der federnd gelagerten Deichsel erfolgt eine Federung entlang der Achse A. Die Federung erfolgt entlang der durch Doppelpfeile dargestellten Federrichtungen 36a, 36b dergestalt, dass über den Fahrzeugrahmen in die Lenksäule eingetragene Schläge und Erschütterungen nicht auf die Deichsel 28 und insbesondere nicht auf den Deichselkopf 30 weitergeleitet werden. Vielmehr ist die Bewegung des Deichselkopfes entlang der Federrichtungen 36a, 36b von dem Fahrzeugrahmen entkoppelt.

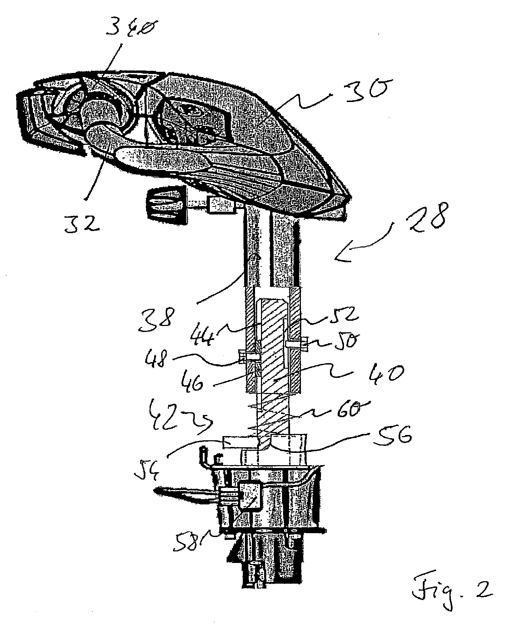

Fig. 2 zeigt in einer schematischen Ansicht die Deichsel 28 mit ihrem Deichselkopf 30 und ihrem Deichselrohr 38. Deutlich zu erkennen ist auch der bogenförmige Griff 32 an dem Deichselkopf 30 mit einem zur Betätigung durch den Daumen vorgesehenen Wippschalter als Bedienelement 34 am inneren Ende des Handgriffs 32.

Das Deichselrohr greift über einen Endabschnitt 40 an der Lenksäule 42 an. Der Endabschnitt 40 besitzt einen Außendurchmesser, der kleiner als der Innendurchmesser des Deichselrohrs 38 ist. In dem Endabschnitt 40 ist eine Nut 44 vorgesehen, in der ein Gleitelement 46 gleitend angeordnet ist. Das Gleitelement 46 ist über eine Schraube 48 an dem Deichselrohr 38 gehalten. Über das Gleitelement erfolgt eine Verschiebung in Längsrichtung zwischen dem Endabschnitt 40 der Lenksäule 42 und dem Deichselrohr 38.

Zu Sicherung des Deichselrohrs 38 auf der Lenksäule 42 ist zudem ein Befestigungselement 50 durch das Deichselrohr geschraubt. Das Befestigungselement 50 greift mit seinem inneren Ende in eine zweite Nut 52 ein. Die zweite Nut 52 ist in Längsrichtung nach oben und nach unten geschlossen. Über die zweite Nut 52 ist der Bewegungsweg von Deichselrohr 38 relativ zur Lenksäule 42 über das Anschlagen des Befestigungselements 50 in der Nut 52 begrenzt. Die Lenksäule 40 besitzt einen seitlich vorstehenden Zapfen 54, der über einen seitlichen Anschlag 56 die Drehbewegung begrenzt.

Der vorstehende Zapfen 54 begrenzt nicht nur die Drehbewegung für die Lenksäule, sondern dient auch einem Federelement 60 als Widerlager. Das Federelement 60 liegt am unteren Rand des Deichselrohrs 38 an und stützt dieses ab. In einer besonderen Ausgestaltung kann das Federelement auch mit dem Deichselrohr 38 an dessen unterem Rand verbunden sein, so dass eine Federspannung bei einer Bewegung in beide Richtungen entsteht.

Eine Drehbewegung an der Lenksäule 42 wird durch eine Drehung des Deichselrohrs 38 auf den Endabschnitt 40 übertragen und dreht diesen, solange der vorstehende Zapfen 54 nicht am Anschlag 56 anliegt. Diese Drehbewegung wird bei einer elektrischen Lenkung beispielsweise von einem Sensor 58 erfasst und in eine elektrische Ansteuerung eines Lenkantriebs umgesetzt. Selbstverständlich kann auch eine mechanische Lenkung erfolgen.

Besonders vorteilhaft an dem erfindungsgemäß ausgestatteten Niederhubfahrzeug ist, dass bei einem Überfahren eines Hindernisses mit dem angetriebenen Rad 22 der Stoß beim Überfahren des Hindernisses eine senkrechte Komponente besitzt, die durch die Federung aufgefangen werden kann.

### Bezugszeichenliste

- 10: Niederhubfahrzeug
- 12: Lastteil
- 14: Antrieb steil
- 16: Lastgabeln
- 18: Lastrollen
- 20: Batterietrog
- 22: angetriebenes Rad
- 24: Schürze
- 26: Fahrerstandplattform
- 28: Kurzdeichsel
- 30: Deichselkopf
- 32: Griffe
- 34: Bedienelemente
- 36a,b: Federrichtungen
- 38: Deichselrohr
- 40: Endabschnitt
- 42: Lenksäule
- 44: Nut
- 46: Gleitelement
- 48: Schraube
- 50: Befestigungselement
- 52: Nut
- 54: Zapfen
- 56: Anschlag
- 58: Sensor
- 60: Federelement

## Patentansprüche

1. Flurförderzeug mit einer an einem Antriebsrahmen drehbar gelagerten Lenksäule und einer Deichsel, die ein Deichselrohr mit einem endseitigen Deichselkopf aufweist, wobei der Außendurchmesser der Lenksäule kleiner als der Innendurchmesser des Deichselrohrs ist, das in Längsrichtung beweglich auf der Lenksäule gelagert ist, wobei ein Federelement (60) zwischen Deichselrohr (38) und Lenksäule (42) angeordnet ist,
**dadurch gekennzeichnet, dass**
die Lenksäule eine erste, in Längsrichtung sich erstreckende Nut (44), in der ein mit dem Deichselrohr (38) verbundenes Gleitelement (46) angeordnet ist und eine zweite, sich in Längsrichtung erstreckende Nut aufweist, die zum freien Ende der Lenksäule hin geschlossen ist und in die ein mit dem Deichselohr (38) verbundenes Sicherungselement eintaucht.

2. Flurförderzeug nach Anspruch 1, **dadurch gekennzeichnet, dass** das Gleitelement (46) über ein durch das Deichselrohr (38) geführtes Befestigungselement (50) in diesem gehalten ist.

3. Flurförderzeug nach Anspruch 1 oder 2, **dadurch gekennzeichnet, dass** das Federelement (60) auf einem vorstehenden Abschnitt der Lenksäule angeordnet ist.

4. Flurförderzeug nach einem der Ansprüche 1 bis 3, **dadurch gekennzeichnet, dass** die Lenksäule (42) im Wesentlichen vertikal stehend an dem Rahmen angeordnet ist.

5. Flurförderzeug nach einem der Ansprüche 1 bis 4, **dadurch gekennzeichnet, dass** die Deichsel als eine Kurzdeichsel ausgebildet ist.

6. Flurförderzeug nach einem der vorangehenden Ansprüche, **dadurch gekennzeichnet, dass** die Deichsel oberhalb der Lenksäule angeordnet ist.
